# FASCICULE DE BREVET EUROPEEN

(11) **EP 3 510 359 B1**
(45) Date de publication et mention de la délivrance du brevet: **21.10.2020**
(21) Numéro de dépôt: 17768523.7
(22) Date de dépôt: 08.09.2017
(51) Int. Cl.: G01D 3/028, G01D 11/24

(54) **DISPOSITIF DE FIXATION POUR LA TENUE D'UN CAPTEUR**
BEFESTIGUNGSVORRICHTUNG ZUR AUFNAHME EINES SENSORS
FASTENING DEVICE FOR HOLDING A SENSOR

(30) Priorité: 12.09.2016 FR 1658483
(43) Date de publication de la demande: 17.07.2019
(73) Titulaire: Payraud, Pierre, 74300 Thyez (FR)
(72) Inventeur: Payraud, Pierre, 74300 Thyez (FR)
(74) Mandataire: Cabinet Poncet
(86) Numéro de dépôt international: PCT/IB2017/055422
(87) Numéro de publication internationale: WO 2018/047105

(56) Documents cités:
- WO-A1-97/45231
- DE-A1-102008 050 902
- US-A- 4 784 491
- US-A1- 2014 254 631

## Description

### DOMAINE TECHNIQUE DE L'INVENTION

La présente invention concerne le domaine des capteurs, et concerne plus particulièrement un dispositif de fixation pour la tenue d'un capteur.

On connaît des capteurs de proximité ayant une forme cylindrique limitée par une extrémité proximale et une extrémité distale. Ces capteurs peuvent être capacitifs, inductifs, optoélectroniques ou à fibre optique par exemple, et ont le plus souvent une section transversale circulaire. De tels capteurs sont par exemple utilisés dans une machine-outil ou sur une chaîne automatisée de fabrication pour détecter la présence d'un objet et/ou mesurer la distance à laquelle se trouve l'objet.

Pour tenir l'un de ces capteurs dans une position fixe par rapport à leur environnement, on connaît un dispositif de fixation, commercialisé par la société BALLUFF GmbH, comportant :
- un corps tubulaire s'allongeant selon un axe longitudinal médian entre une première extrémité et une deuxième extrémité et comprenant un passage longitudinal traversant destiné à recevoir ledit capteur,
- des moyens d'immobilisation axiale du capteur dans le passage longitudinal traversant,
- à la deuxième extrémité du corps tubulaire, un épanouissement s'étendant radialement vers l'intérieur et définissant un orifice à section transversale de dimensions inférieures aux dimensions de la section transversale du capteur.

Le corps tubulaire est par exemple muni d'un filetage extérieur sur une partie au moins de sa surface extérieure pour autoriser sa fixation à travers une paroi au moyen d'un écrou et d'un contre-écrou.

Lors de l'utilisation d'un tel dispositif de fixation, le capteur est inséré dans le passage longitudinal traversant du corps tubulaire. A la fin de son insertion, l'extrémité distale du capteur vient en butée contre l'épanouissement radial, obstruant ainsi l'orifice, puis les moyens d'immobilisation axiale sont manœuvrés pour immobiliser axialement le capteur dans le passage longitudinal traversant. La détection est effectuée au travers de l'orifice défini par l'épanouissement radial.

Le capteur peut être perturbé par un environnement salissant, par exemple par projections d'huile de coupe, de copeaux de matière ou de limaille se déposant sur l'extrémité distale du capteur. Ces dépôts peuvent empêcher le capteur de fonctionner correctement. Lorsqu'un capteur fonctionne mal, la machine-outil ou chaîne automatisée est immédiatement arrêtée pour éviter un incident. Un technicien doit alors intervenir pour démonter le capteur, le nettoyer, le remonter, vérifier son fonctionnement, puis remettre en marche la machine-outil ou chaîne automatisée.

Il se produit ainsi des arrêts de production qui réduisent assez fortement la productivité. En l'absence de technicien, la machine-outil ou chaîne automatisée peut parfois rester à l'arrêt pendant une période de temps importante.

Du document WO 97/45231 A1, on connaît un dispositif de fixation comportant :
- un corps tubulaire s'allongeant selon un axe longitudinal médian entre une première extrémité et une deuxième extrémité et comprenant un passage longitudinal traversant destiné à recevoir ledit capteur,
- des moyens d'immobilisation axiale du capteur dans le passage longitudinal traversant.

Pour limiter les risques de perturbation et/ou dysfonctionnement du capteur, le document WO 97/45231 A1 prévoit de former une barrière de protection cylindrique continue tout autour de la face de détection du capteur à l'aide d'un flux liquide ou gazeux injecté dans une chambre annulaire ménagée entre le capteur et le corps tubulaire. Cette barrière est formée par le flux axial cylindrique de fluide sortant hors du corps tubulaire sous la forme d'une couronne continue tout autour de la face de détection du capteur. Introduire une butée au moyen d'un épanouissement radial au contact duquel viendrait la face de détection du capteur, interromprait (voire supprimerait) cette barrière et détériorerait donc la protection recherchée du capteur. Par ailleurs, la barrière de protection cylindrique ne protège pas totalement la face de détection du capteur.

### EXPOSE DE L'INVENTION

Un problème proposé par la présente invention est de fournir un dispositif de fixation pour la tenue d'un capteur qui permette de réduire, voire éviter, les perturbations du capteur par un environnement salissant, et ce sans augmenter de façon significative l'encombrement du dispositif de fixation qui dispose généralement de peu de place dans l'environnement.

Simultanément, la présente invention vise à fournir un dispositif de fixation pour la tenue d'un capteur permettant une protection plus efficace du capteur dans un environnement salissant, et permettant en outre de rétablir en fonction un capteur après que celui-ci ait été rendu inopérant par l'environnement salissant.

Pour atteindre ces objets ainsi que d'autres, l'invention propose un dispositif de fixation pour la tenue d'un capteur ayant une forme cylindrique limitée par une extrémité proximale et une extrémité distale, le dispositif de fixation comportant :
- un corps tubulaire s'allongeant le long d'un axe longitudinal médian entre une première extrémité et une deuxième extrémité et comprenant un passage longitudinal traversant destiné à recevoir ledit capteur,
- des moyens d'immobilisation axiale du capteur dans le passage longitudinal traversant,
- à la deuxième extrémité du corps tubulaire, un épanouissement s'étendant radialement vers l'intérieur et définissant un orifice à section transversale de dimensions inférieures aux dimensions de la section transversale du capteur ; selon l'invention :
- les moyens d'immobilisation axiale sont conformés de façon à maintenir l'extrémité distale du capteur à un écart longitudinal minimal prédéterminé dudit épanouissement, de sorte qu'un espace de conduction radiale de fluide est formé entre l'épanouissement et l'extrémité distale du capteur,
- le dispositif de fixation comporte des moyens d'amenée d'un fluide à l'intérieur du corps tubulaire et jusque dans l'espace de conduction radiale de fluide compris entre l'épanouissement et l'extrémité distale du capteur.

Les moyens d'immobilisation axiale garantissent eux-mêmes le maintien de l'extrémité distale du capteur à un écart longitudinal minimal prédéterminé dudit épanouissement, de sorte que la surface frontale d'extrémité distale du capteur ne peut pas venir au contact dudit épanouissement, laissant libre un espace de conduction radiale de fluide qui assure une fonction de conduction et de déviation lorsque du fluide, tel que de l'air par exemple, est injecté entre l'épanouissement et l'extrémité distale du capteur : l'épanouissement radial dirige au moins une partie du flux radialement vers l'intérieur. Cette partie du fluide injecté dans le corps tubulaire vient ainsi, après déviation par l'épanouissement radial, balayer la surface frontale d'extrémité distale du capteur avant de s'échapper par l'orifice défini par l'épanouissement à la deuxième extrémité du corps tubulaire et laissé ouvert grâce aux moyens d'immobilisation axiale. Cet écoulement dévié de fluide sur l'extrémité distale du capteur permet de mieux limiter les risques de dépôts sur la surface frontale d'extrémité distale du capteur pouvant entraîner un dysfonctionnement du capteur, et permet même d'éjecter des éventuels dépôts qui se seraient formés sur l'extrémité distale du capteur et provoquant un dysfonctionnement du capteur.

L'injection de fluide peut être permanente durant le temps de fonctionnement de la machine-outil ou de la chaîne automatisée, ou peut être commandée de façon automatique lorsqu'un dysfonctionnement du capteur est constaté par l'automate gérant la machine-outil ou chaîne automatisée, ou peut être encore commandée à intervalles réguliers ou non durant le temps de fonctionnement de la machine-outil ou de la chaîne automatisée.

Les moyens d'amenée d'un fluide étant ménagés à l'intérieur du corps tubulaire, l'encombrement du dispositif de fixation n'est pas augmenté, ou alors très peu.

Le fluide injecté permet également de refroidir efficacement le capteur, et notamment la surface frontale d'extrémité distale du capteur lorsque cette dernière est exposée à de fortes sources de chaleur à travers l'orifice ménagé dans la deuxième extrémité du corps tubulaire.

Avantageusement, les moyens d'immobilisation axiale peuvent comprendre des moyens de butée axiale, comportant au moins une facette de butée destinée à recevoir en appui l'extrémité distale du capteur pour maintenir l'extrémité distale du capteur à un écart longitudinal prédéterminé dudit épanouissement.

Les moyens de butée axiale permettent de limiter la pénétration du capteur dans le passage longitudinal traversant afin d'éviter que l'extrémité distale de celui-ci vienne au contact de l'épanouissement radial. On évite ainsi que l'extrémité distale du capteur vienne en appui contre l'épanouissement radial et obstrue l'orifice défini par celui-ci. On évite également que l'écart longitudinal compris entre l'épanouissement et l'extrémité distale du capteur soit trop grand et empêche l'épanouissement de jouer efficacement son rôle de déflecteur pour dévier le flux de fluide et le diriger vers la surface frontale d'extrémité distale du capteur. L'espace de conduction radiale de fluide compris entre l'épanouissement et l'extrémité distale du capteur est ainsi préservé de façon fiable pour une injection de fluide balayant de façon suffisante la surface frontale d'extrémité distale du capteur et s'échappant ensuite par l'orifice.

De préférence, les moyens de butée axiale peuvent comprendre au moins une excroissance s'étendant longitudinalement depuis l'épanouissement en direction de la première extrémité. On règle ainsi facilement et précisément l'écart longitudinal prédéterminé entre l'extrémité distale du capteur et l'épanouissement radial.

Avantageusement, on peut prévoir que :
- le passage longitudinal traversant comporte :
   - un premier tronçon comportant des premiers moyens d'appui conformés de façon à venir porter en appui contre la surface extérieure cylindrique du capteur,
   - un deuxième tronçon, faisant suite au premier tronçon en direction de la deuxième extrémité, comportant une section transversale de dimensions supérieures aux dimensions de la section transversale du capteur et procurant ainsi une chambre radiale ménagée autour du capteur lorsque celui-ci est engagé dans le deuxième tronçon,
   - un troisième tronçon, faisant suite au deuxième tronçon en direction de la deuxième extrémité, comportant des deuxièmes moyens d'appui conformés de façon à venir porter en appui contre la surface extérieure cylindrique du capteur,
   - un quatrième tronçon, compris entre ledit épanouissement et ladite au moins une facette de butée,
- les moyens d'amenée d'un fluide comportent :
   - la chambre radiale ménagée dans le deuxième tronçon,
   - un passage radial ménagé dans la paroi latérale du corps tubulaire et permettant l'injection d'un fluide dans la chambre radiale du deuxième tronçon,
   - au moins un passage longitudinal autorisant le passage d'un fluide depuis le deuxième tronçon vers le quatrième tronçon en présence d'un capteur engagé dans le troisième tronçon.

Le dispositif de fixation est ainsi très compact et simple à fabriquer par usinage.

De préférence, les deuxièmes moyens d'appui peuvent comporter une pluralité de protubérances s'étendant radialement vers l'intérieur, séparées entre elles par une pluralité de passages longitudinaux autorisant le passage d'un fluide depuis le deuxième tronçon vers le quatrième tronçon en présence d'un capteur engagé dans le troisième tronçon.

Les protubérances permettent de tenir radialement le capteur avec un faible jeu, en définissant entre elles une section transversale de dimensions sensiblement égales aux dimensions de la section transversale du capteur. Entre les protubérances sont prévus des passages longitudinaux permettant une injection de fluide selon un débit suffisant pour bien nettoyer l'extrémité distale du capteur.

Avantageusement, les protubérances et passages longitudinaux peuvent être obtenus de façon simple et rapide par fraisage radial.

Afin que la majeure partie du fluide injecté, voire la totalité, soit dirigée vers l'épanouissement radial pour balayer l'extrémité distale du capteur, on peut de préférence prévoir que les premiers moyens d'appui comprennent une surface latérale cylindrique à section transversale de dimensions sensiblement égales aux dimensions de la section transversale du capteur. Les premiers moyens d'appui tiennent ainsi radialement le capteur avec un faible jeu pour une bonne fiabilité. Et ce faible jeu n'autorise que peu (voire pas) de fluide à passer entre les premiers moyens d'appui et le capteur, et en tous cas moins que la quantité de fluide qu'il est possible de faire passer vers la deuxième extrémité du corps tubulaire. En d'autres termes, l'engagement du capteur dans les premiers moyens d'appui constitue une obstruction suffisante du passage longitudinal traversant pour que la majeure partie du fluide injecté, voire la totalité, soit dirigée vers la deuxième extrémité du corps tubulaire et son épanouissement radial.

En alternative, il est possible d'utiliser des premiers moyens d'appui similaires aux deuxièmes moyens d'appui (donc laissant passer aisément le fluide en direction de la première extrémité du corps tubulaire), mais en utilisant en outre des moyens d'obstruction au moins partielle (voire totale) de la première extrémité du corps tubulaire, de façon que la majeure partie (voire la totalité) du fluide injecté dans le corps tubulaire soit dirigée vers la deuxième extrémité du corps tubulaire pour être dirigée ensuite par l'épanouissement radial sur l'extrémité distale du capteur.

Avantageusement, les moyens d'immobilisation axiale peuvent comprendre un filetage intérieur destiné à coopérer avec un filetage extérieur prévu sur la surface extérieure du capteur. Le filetage intérieur des moyens d'immobilisation axiale, par sa coopération avec le filetage extérieur prévu sur la surface extérieure du capteur, permet une retenue axiale fiable du capteur dans le passage longitudinal traversant, et avec une relative étanchéité pour que la majeure partie du fluide injecté, voire la totalité, soit dirigée vers la deuxième extrémité du corps tubulaire et son épanouissement radial.

De préférence, l'épanouissement peut être annulaire. Un balayage de l'extrémité distale du capteur est ainsi sensiblement uniforme selon toutes les directions radiales.

Avantageusement, le corps tubulaire peut être pourvu d'un filetage extérieur sur une partie au moins de sa surface extérieure.

Selon un autre aspect de la présente invention, il est proposé un procédé de nettoyage et/ou de refroidissement d'un capteur ayant une forme cylindrique limitée par une extrémité proximale et une extrémité distale. Ledit procédé comporte les étapes suivantes :
a) fournir un capteur ayant une forme cylindrique limitée par une extrémité proximale et une extrémité distale,
b) fournir un dispositif de fixation pour la tenue du capteur comprenant :
   - un corps tubulaire s'allongeant selon un axe longitudinal médian entre une première extrémité et une deuxième extrémité et comprenant un passage longitudinal traversant destiné à recevoir ledit capteur,
   - des moyens d'immobilisation axiale du capteur dans le passage longitudinal traversant,
   - à la deuxième extrémité du corps tubulaire, un épanouissement s'étendant radialement vers l'intérieur et définissant un orifice à section transversale de dimensions inférieures aux dimensions de la section transversale du capteur,
   - des moyens d'amenée d'un fluide à l'intérieur du corps tubulaire et jusqu'au voisinage de l'épanouissement,
c) insérer le capteur dans le passage longitudinal traversant du corps tubulaire en ménageant un écart longitudinal non nul entre l'extrémité distale du capteur et ledit épanouissement, de sorte qu'une partie au moins d'un fluide circulant dans le corps tubulaire par les moyens d'amenée de fluide puisse circuler dans un espace de conduction radiale de fluide ainsi ménagé entre l'épanouissement et l'extrémité distale du capteur,
d) injecter un fluide à l'intérieur du corps tubulaire de façon que le fluide circule dans l'espace de conduction radiale de fluide ménagé entre l'épanouissement et l'extrémité distale du capteur et soit dévié pour balayer la surface frontale d'extrémité distale du capteur.

Lors d'un tel procédé, on peut utiliser un dispositif de fixation dépourvu de moyens d'immobilisation axiale conformés de façon à maintenir l'extrémité distale du capteur à un écart longitudinal minimal prédéterminé dudit épanouissement (comme dans l'état de la technique antérieur) mais comportant toutefois des moyens d'amenée d'un fluide à l'intérieur du corps tubulaire et jusqu'au voisinage de l'épanouissement. Il doit être noté qu'un tel dispositif de fixation pourra faire l'objet d'une protection en tant que tel par brevet, notamment par le biais d'une demande divisionnaire.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue en perspective d'un premier mode de réalisation de dispositif de fixation selon la présente invention, avec un capteur inséré dans le passage traversant du corps tubulaire ;
- la figure 2 est une vue en coupe longitudinale du dispositif de fixation de la figure 1 ;
- la figure 3 est une vue de détail de la figure 2 ;
- la figure 4 est une vue en coupe longitudinale du dispositif de fixation de la figure 1, avec le capteur hors du passage traversant du corps tubulaire ;
- la figure 5 est une vue en coupe transversale du corps tubulaire du dispositif de fixation de la figure 1 ;
- la figure 6 est une vue en perspective d'une coupe transversale oblique du corps tubulaire du dispositif de fixation de la figure 1 ;
- la figure 7 est une vue en coupe longitudinale d'un deuxième mode de réalisation de dispositif de fixation selon la présente invention, avec un capteur hors du passage traversant du corps tubulaire ;
- la figure 8 est une vue en coupe longitudinale d'un troisième mode de réalisation de dispositif de fixation selon la présente invention, avec un capteur hors du passage traversant du corps tubulaire ; et
- la figure 9 est une vue en perspective du dispositif de fixation de la figure 8.

### DESCRIPTION DES MODES DE REALISATION PREFERES

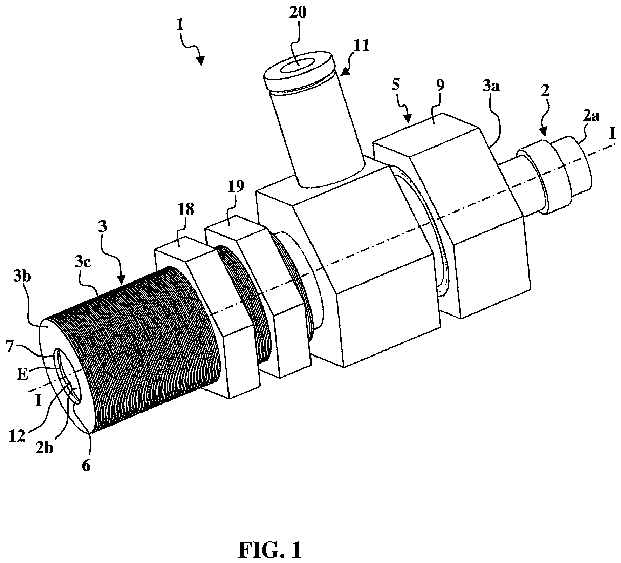

Sur les figures 1 à 6 est illustré un premier mode de réalisation de dispositif de fixation 1 selon l'invention pour la tenue d'un capteur 2. Le capteur 2 a une forme cylindrique limitée par une extrémité proximale 2a et une extrémité distale 2b à surface frontale d'extrémité 20b.

Le dispositif de fixation 1 comporte :
- un corps tubulaire 3 s'allongeant le long d'un axe longitudinal médian I-I entre une première extrémité 3a et une deuxième extrémité 3b et comprenant un passage longitudinal traversant 4 destiné à recevoir ledit capteur 2,
- des moyens d'immobilisation axiale 5 du capteur 2 dans le passage longitudinal traversant 4.

L'axe longitudinal I-I est médian en ce qu'il est sensiblement situé au centre du passage longitudinal traversant 4.

Le corps tubulaire 3 comporte un filetage extérieur 3c de façon à coopérer avec un écrou 18 et un contre-écrou 19 pour son montage à travers une paroi d'une machine-outil ou chaîne automatisée.

A la deuxième extrémité 3b du corps tubulaire 3, un épanouissement 6 s'étend radialement vers l'intérieur (autrement dit en se rapprochant de l'axe longitudinal médian I-I) et définit un orifice 7 à section transversale de dimensions inférieures aux dimensions de la section transversale du capteur 2. En l'espèce, l'orifice 7 présente un diamètre D7 inférieur au diamètre D2 de l'extrémité distale 2b du capteur 2.

Les moyens d'immobilisation axiale 5 sont conformés de façon à maintenir l'extrémité distale 2b du capteur 2 à un écart E longitudinal minimal (non nul) prédéterminé dudit épanouissement 6. L'extrémité distale 2b du capteur 2 ne peut ainsi pas venir en butée contre l'épanouissement 6, lequel peut ainsi assurer de façon fiable une fonction de déviation de fluide injecté, comme il sera expliqué ci-après.

L'épanouissement 6 est annulaire de façon à procurer un balayage, sensiblement uniforme selon toutes les directions radiales, de l'extrémité distale 2b (et de sa surface frontale d'extrémité 20b) du capteur 2 par le fluide injecté.

Dans le mode de réalisation des figures 1 à 6, les moyens d'immobilisation axiale 5 comprennent une bague conique 8, déformable élastiquement, et destinée à être pressée axialement entre un écrou 9 coopérant avec une portée conique 10. La coopération de l'écrou 9 avec portée conique 10 permet de déformer la bague conique 8 vers l'intérieur (autrement dit en se rapprochant de l'axe longitudinal médian I-I) pour serrer cette dernière contre la surface extérieure cylindrique du capteur 2 et immobiliser axialement ce dernier selon l'axe longitudinal médian I-I.

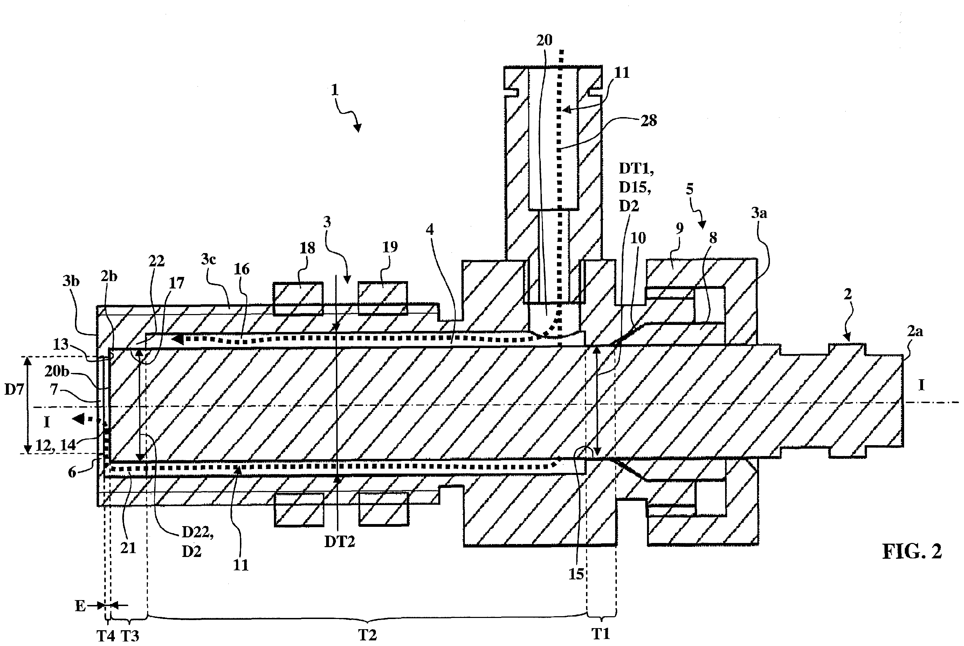

On voit plus particulièrement sur la figure 2 que le dispositif de fixation 1 comporte des moyens d'amenée d'un fluide 11 à l'intérieur du corps tubulaire 3 et jusqu'au voisinage immédiat (en amont) de l'épanouissement 6. Les moyens d'amenée de fluide 11 permettent plus précisément d'amener le fluide jusque dans l'espace E compris entre l'épanouissement 6 et l'extrémité distale 2b du capteur 2 lorsque ce dernier est inséré dans le passage longitudinal traversant 4.

Toujours sur la figure 2, on voit que les moyens d'immobilisation axiale 5 comprennent également des moyens de butée axiale 12, comportant au moins une facette de butée 13 destinée à recevoir en appui l'extrémité distale 2b du capteur 2 pour maintenir l'extrémité distale 2b du capteur 2 à un écart E longitudinal prédéterminé dudit épanouissement 6.

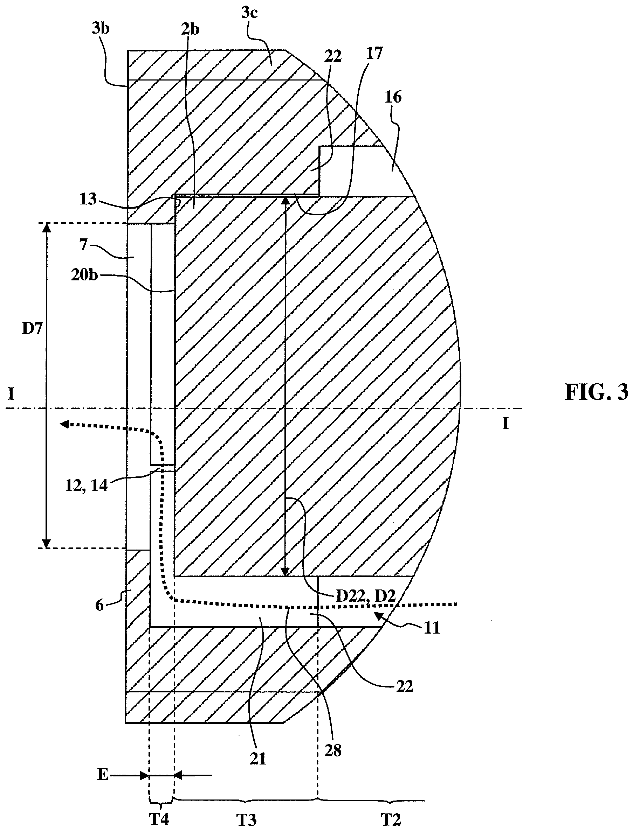

Il y a en l'espèce trois facettes de butée 13 réparties à 120°, comme on le comprend mieux à l'aide des figures 3, 5 et 6. Ces facettes de butée 13 sont portées par des excroissances 14 s'étendant longitudinalement depuis l'épanouissement 6 en direction de la première extrémité 3a (ou à l'écart de la deuxième extrémité 3b) du corps tubulaire 3.

On voit plus particulièrement sur les figures 2 à 4 que le passage longitudinal traversant 4 comporte :
- un premier tronçon T1 comportant des premiers moyens d'appui 15 conformés de façon à venir porter en appui contre la surface extérieure cylindrique du capteur 2,
- un deuxième tronçon T2, faisant suite au premier tronçon T1 en direction de la deuxième extrémité 3b, comportant une section transversale de dimensions (diamètre DT2) supérieures aux dimensions de la section transversale (diamètre D2) du capteur 2 et procurant ainsi une chambre radiale 16 ménagée autour du capteur 2 lorsque celui-ci est engagé dans le deuxième tronçon T2,
- un troisième tronçon T3, faisant suite au deuxième tronçon T2 en direction de la deuxième extrémité 3b, comportant des deuxièmes moyens d'appui 17 conformés de façon à venir porter en appui contre la surface extérieure cylindrique du capteur 2,
- un quatrième tronçon T4, compris entre ledit épanouissement 6 et ladite au moins une facette de butée 13.
Toujours sur les figures 2 à 4, on voit que les moyens d'amenée d'un fluide 11 comportent :
- la chambre radiale 16 ménagée dans le deuxième tronçon T2,
- un passage radial 20 ménagé dans la paroi latérale du corps tubulaire 3 et permettant l'injection d'un fluide (liquide ou gazeux) dans la chambre radiale 16 du deuxième tronçon T2,
- au moins un passage longitudinal 21 autorisant le passage d'un fluide depuis le deuxième tronçon T2 vers le quatrième tronçon T4 en présence d'un capteur 2 engagé dans le troisième tronçon T3 (voir figure 3).

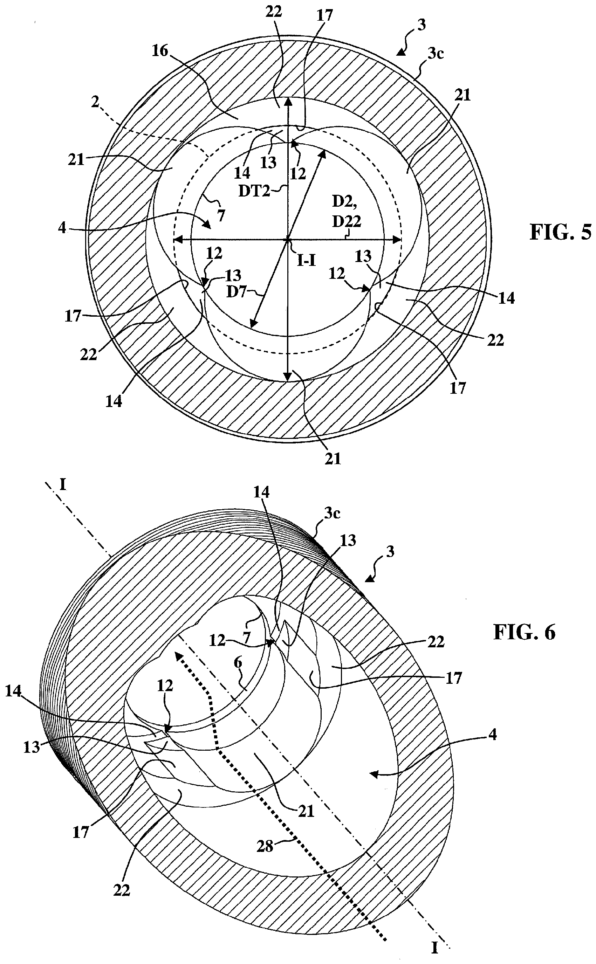

Là encore, il existe en réalité trois passages longitudinaux 21 répartis à 120°, comme il est plus particulièrement visible sur les figures 5 et 6. Sur la figure 5, le cercle en traits discontinus illustre schématiquement le capteur 2 lorsqu'il est engagé dans le troisième tronçon T3.

La réalisation de la chambre radiale 16 au moyen d'un alésage de diamètre DT2 supérieur au diamètre D2 du capteur 2 n'est que l'une des possibilités et n'est pas limitative. On peut par exemple, en alternative, prévoir une chambre radiale 16 comprenant une ou plusieurs rainures longitudinales ménagée(s) dans la paroi latérale cylindrique d'un alésage, dans le deuxième tronçon, de diamètre sensiblement égal au diamètre D2 du capteur 2.

Toujours sur les figures 5 et 6, on voit que les deuxièmes moyens d'appui 17 comportent trois protubérances 22 s'étendant radialement vers l'intérieur (autrement dit en se rapprochant de l'axe longitudinal médian I-I), séparées entre elles par une pluralité de passages longitudinaux 21 autorisant le passage d'un fluide depuis le deuxième tronçon T2 vers le quatrième tronçon T4 en présence d'un capteur 2 engagé dans le troisième tronçon T3. Les trois protubérances 22 définissent entre elles un logement de diamètre D22 sensiblement égal au diamètre D2 du capteur 2.

Les protubérances 22 et passages longitudinaux 21 sont obtenus par fraisage radial, c'est-à-dire par retrait de matière selon un mouvement d'outil à l'écart de l'axe longitudinal médian I-I.

Les premiers moyens d'appui 15 comprennent quant à eux une surface latérale cylindrique 23 à section transversale de dimensions (diamètre D15 ou DT1) sensiblement égales aux dimensions (diamètre D2) de la section transversale du capteur 2.

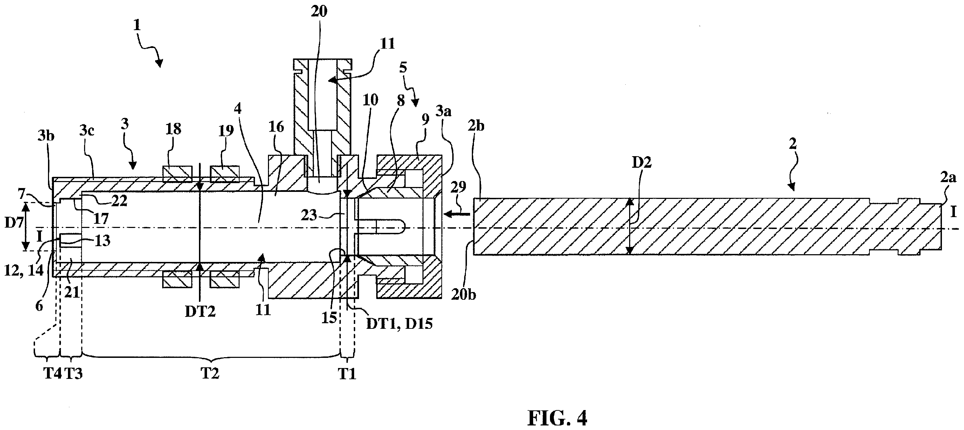

Le fonctionnement du premier mode de réalisation de dispositif de fixation 1 va désormais être explicité de façon plus détaillée à l'aide des figures 2 et 4.

Lors de son montage dans le dispositif de fixation 1, le capteur 2 est inséré selon la direction de l'axe longitudinal médian I-I dans le passage longitudinal traversant 4 (flèche 29 sur la figure 4). L'insertion du capteur 2 est stoppée par la venue en appui de l'extrémité distale 2b du capteur 2 contre les facettes de butée 13 (figure 2). Un écart E longitudinal (c'est-à-dire selon l'axe longitudinal I-I) prédéterminé minimal non nul est ainsi maintenu entre l'extrémité distale 2b et l'épanouissement radial 6, permettant une sortie du fluide injecté selon un débit satisfaisant. L'écrou 9 est alors manœuvré pour immobiliser axialement le capteur 2 en coopération avec la bague conique 8 et la portée conique 10.

Si nécessaire, un écart longitudinal supérieur à l'écart E longitudinal prédéterminé minimal défini par les moyens de butée axiale 12 peut être ménagé en manœuvrant les moyens d'immobilisation axiale 5 (bague conique 8, écrou 9 et portée conique 10) avant que l'extrémité distale 2b du capteur 2 vienne au contact des facettes de butée 13. Il faut néanmoins que l'extrémité distale 2b du capteur 2 soit suffisamment proche de l'épanouissement 6 pour que ce dernier joue efficacement son rôle de déflecteur vers la surface frontale d'extrémité 20b.

Lors du fonctionnement de la machine-outil ou de la chaîne automatisée, un fluide est injecté dans le corps tubulaire 3 par le passage radial 20. Son parcours est illustré par la ligne discontinue référencée 28. La première extrémité 3a étant obstruée de façon quasiment étanche par le fait que le capteur 2 est engagé dans les premiers moyens d'appui 15, le fluide (liquide ou gazeux) pénètre alors dans la chambre radiale 16 et progresse selon la direction longitudinale I-I en direction de la deuxième extrémité 3b du corps tubulaire 3 sur toute la longueur du deuxième tronçon T2.

Une fois parvenu au niveau de l'extrémité distale 2b du capteur 2, le fluide injecté pénètre dans les trois passages longitudinaux 21 et traverse ainsi le troisième tronçon T3 pour parvenir dans l'espace de conduction radiale de fluide compris axialement selon l'axe longitudinal médian I-I entre l'épanouissement 6 et l'extrémité distale 2b du capteur 2 (correspondant au quatrième tronçon T4). Cet espace de conduction radiale de fluide est préservé de façon fiable grâce aux moyens d'immobilisation axiale 5.

Le fluide est alors dévié radialement vers l'intérieur (autrement dit en se rapprochant de l'axe longitudinal médian I-I) par l'épanouissement radial 6 jouant un rôle de déflecteur pour faire lécher par le flux la surface frontale d'extrémité 20b distale du capteur 2. Le fluide s'échappe ensuite à travers l'orifice 7.

La surface frontale d'extrémité 20b distale est ainsi léchée par le flux du fluide injecté, ce qui permet de mieux éviter son encrassement, voire de la nettoyer après un encrassement. Le flux de fluide permet également de refroidir efficacement le capteur 2, et notamment sa surface frontale d'extrémité 20b distale lorsque cette dernière est exposée à de fortes sources de chaleur à travers l'orifice 7.

L'injection de fluide peut être permanente durant le temps de fonctionnement de la machine-outil ou de la chaîne automatisée, ou peut être commandée de façon automatique lorsqu'un dysfonctionnement du capteur 2 est constaté par l'automate gérant la machine-outil ou chaîne automatisée, ou peut être encore commandée à intervalles réguliers durant le temps de fonctionnement de la machine-outil ou de la chaîne automatisée (nettoyage et/ou refroidissement préventif). Une commande à intervalle régulier est d'autant plus envisageable avec le dispositif selon la présente invention que la déviation du fluide par l'épanouissement 6 permet non seulement de mieux limiter les risques d'un encrassement de la surface frontale d'extrémité 20b distale, mais aussi de la nettoyer après un encrassement.

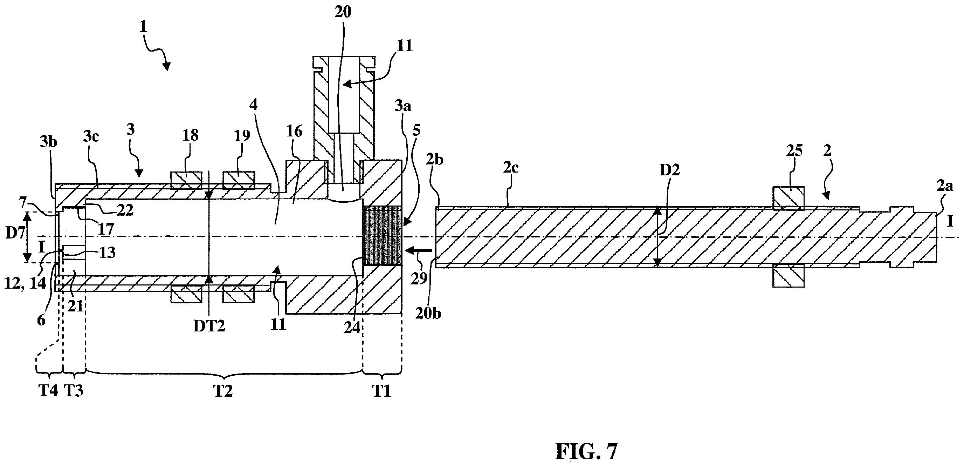

Le deuxième mode de réalisation de dispositif de fixation 1 illustré sur la figure 7 est très similaire au premier mode de réalisation de dispositif de fixation 1 illustré sur les figures 1 à 6. Les références numériques utilisées pour la description du premier mode de réalisation désignent ainsi les mêmes éléments que dans le deuxième mode de réalisation.

La différence entre le deuxième mode de réalisation et le premier mode de réalisation est que les moyens d'immobilisation axiale 5 comprennent, dans le premier tronçon T1, un filetage intérieur 24 destiné à coopérer avec un filetage extérieur 2c prévu sur la surface extérieure du capteur 2.

Dans ce deuxième mode de réalisation, un écrou 25 coopérant avec le filetage extérieur 2c peut également être utilisé pour limiter la pénétration par vissage du capteur 2 dans le corps tubulaire 3 afin de maintenir l'extrémité distale 2b du capteur 2 à un écart longitudinal prédéterminé dudit épanouissement 6. L'écrou 25 peut ainsi être utilisé lorsque les facettes de butée 13 définissent un écart longitudinal prédéterminé minimal non nul insuffisamment grand à l'écart de l'épanouissement 6 (ou lorsqu'il est souhaitable de disposer d'un écart plus important entre l'extrémité distale 2b du capteur 2 et l'épanouissement 6 que celui procuré par les facettes de butée 13).

Comme dans le premier mode de réalisation, le deuxième mode de réalisation de dispositif de fixation 1 comporte un filetage extérieur 3c du corps tubulaire 3 de façon à coopérer avec un écrou 18 et un contre-écrou 19 pour son montage à travers une paroi d'une machine-outil ou chaîne automatisée.

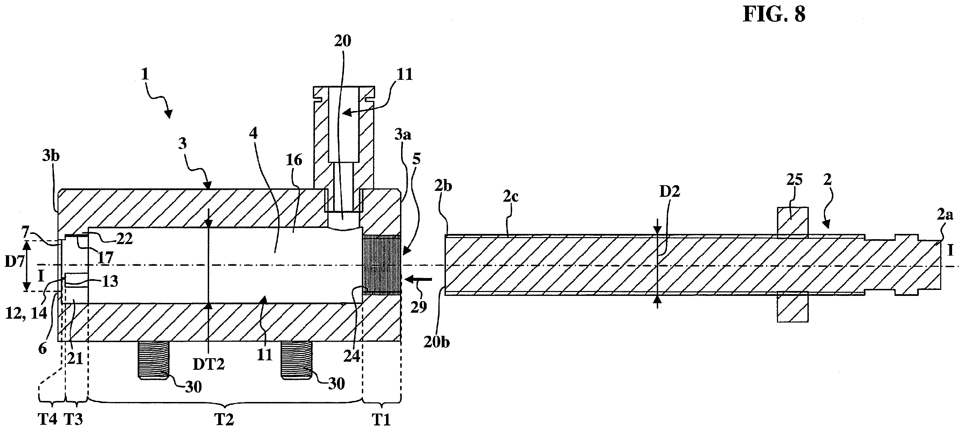

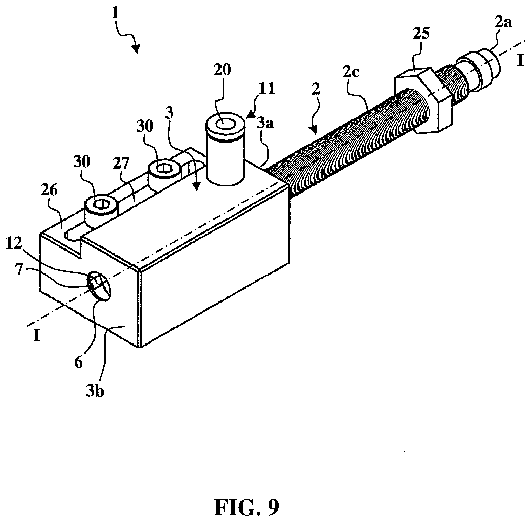

Le troisième mode de réalisation de dispositif de fixation 1 illustré sur les figures 8 et 9 est également très similaire aux premier et deuxième modes de réalisation de dispositif de fixation 1 illustré sur les figures 1 à 6 et 7. Les références numériques utilisées pour la description du troisième mode de réalisation désignent ainsi les mêmes éléments que dans les premier et deuxième modes de réalisation.

Dans le troisième mode de réalisation, au lieu d'un filetage extérieur 3c prévu sur le corps tubulaire 3 pour sa fixation sur une machine-outil ou chaîne automatisée, le corps tubulaire 3 comporte un épanouissement radial 26 dans lequel est ménagé un trou oblong 27 destiné à être traversé par une ou plusieurs vis 30 destinées à se visser dans la machine-outil ou chaîne automatisée.

Il doit être noté que le corps tubulaire 3 du troisième mode de réalisation de dispositif de fixation 1 peut en alternative comporter des moyens d'immobilisation axiale 5 semblables à ceux utilisés dans le premier mode de réalisation (avec la bague conique 8, l'écrou 9 et la portée conique 10) pour recevoir des capteurs 2 dépourvus de filetage extérieur 2c sur leur surface extérieure.

Le fonctionnement des deuxième et troisième modes de réalisation de dispositif de fixation 1 est très similaire à celui du premier mode de réalisation.

Une différence est que la pénétration du capteur 2 peut être stoppée avant la venue en butée de l'extrémité distale 2b contre les facettes de butée 13 par la venue de l'écrou 25 en appui contre la première extrémité 3a du corps tubulaire 3 (cas où l'écart E longitudinal prédéterminé minimal non nul défini par les facettes de butée 13 est estimé insuffisant pour permettre un débit suffisant de fluide).

Dans les deuxième et troisième modes de réalisation, la première extrémité 3a du corps tubulaire 3 est obstruée de façon quasiment étanche par le fait que le capteur 2 est vissé dans le filetage intérieur 24 des moyens d'immobilisation axiale 5, de sorte que le fluide (liquide ou gazeux) pénétrant dans la chambre radiale 16 progresse également selon la direction longitudinale I-I en direction de la deuxième extrémité 3b du corps tubulaire 3 sur toute la longueur du deuxième tronçon T2.

Dans toutes les utilisations pour du nettoyage et/ou du refroidissement du capteur 2, on procède selon les étapes suivantes :
a) fournir un capteur 2 ayant une forme cylindrique limitée par une extrémité proximale 2a et une extrémité distale 2b,
b) fournir un dispositif de fixation 1 pour la tenue du capteur 2 comprenant :
   - un corps tubulaire 3 s'allongeant selon un axe longitudinal médian I-I entre une première extrémité 3a et une deuxième extrémité 3b et comprenant un passage longitudinal traversant 4 destiné à recevoir ledit capteur 2,
   - des moyens d'immobilisation axiale 5 du capteur 2 dans le passage longitudinal traversant 4,
   - à la deuxième extrémité 3b du corps tubulaire 3, un épanouissement 6 s'étendant radialement vers l'intérieur et définissant un orifice 7 à section transversale de dimensions inférieures aux dimensions de la section transversale du capteur 2,
   - des moyens d'amenée d'un fluide 11 à l'intérieur du corps tubulaire 3 et jusqu'au voisinage de l'épanouissement 6,
c) insérer le capteur 2 dans le passage longitudinal traversant 4 du corps tubulaire 3 en ménageant un écart longitudinal non nul entre l'extrémité distale 2b du capteur 2 et ledit épanouissement 6, de sorte qu'une partie au moins d'un fluide injecté dans le corps tubulaire 3 puisse circuler dans un espace de conduction radiale de fluide ainsi ménagé entre l'épanouissement 6 et l'extrémité distale 2b du capteur 2,
d) injecter un fluide à l'intérieur du corps tubulaire 3 de façon que le fluide circule dans l'espace de conduction radiale de fluide ménagé entre l'épanouissement 6 et l'extrémité distale 2b du capteur 2 et soit dévié pour balayer la surface frontale d'extrémité 20b distale du capteur 2.

Lorsque le dispositif de fixation 1 est, comme dans l'art antérieur, dépourvu de moyens d'immobilisation axiale 5 conformés de façon à maintenir l'extrémité distale 2b du capteur 2 à un écart E longitudinal minimal prédéterminé dudit épanouissement 6, ledit écart longitudinal non nul entre l'extrémité distale 2b du capteur 2 et ledit épanouissement 6 peut être ménagé en n'enfonçant pas le capteur 2 jusqu'à venir au contact de l'épanouissement 6.

La présente invention n'est pas limitée aux modes de réalisation qui ont été explicitement décrits, mais elle en inclut les diverses variantes et généralisations contenues dans le domaine des revendications ci-après.

## Revendications

1. Dispositif de fixation (1) pour la tenue d'un capteur (2) ayant une forme cylindrique limitée par une extrémité proximale (2a) et une extrémité distale (2b), le dispositif de fixation (1) comportant :
- un corps tubulaire (3) s'allongeant le long d'un axe longitudinal médian (I-I) entre une première extrémité (3a) et une deuxième extrémité (3b) et comprenant un passage longitudinal traversant (4) destiné à recevoir ledit capteur (2),
- des moyens d'immobilisation axiale (5) du capteur (2) dans le passage longitudinal traversant (4),
- à la deuxième extrémité (3b) du corps tubulaire (3), un épanouissement (6) s'étendant radialement vers l'intérieur et définissant un orifice (7) à section transversale de dimensions inférieures aux dimensions de la section transversale du capteur (2),
**caractérisé en ce que** :
- les moyens d'immobilisation axiale (5) sont conformés de façon à maintenir l'extrémité distale (2b) du capteur (2) à un écart (E) longitudinal minimal prédéterminé dudit épanouissement (6), de sorte qu'un espace de conduction radiale de fluide est formé entre l'épanouissement (6) et l'extrémité distale (2b) du capteur (2),
- le dispositif de fixation (1) comporte des moyens d'amenée d'un fluide (11) à l'intérieur du corps tubulaire (3) et jusque dans l'espace de conduction radiale compris entre l'épanouissement (6) et l'extrémité distale (2b) du capteur (2).

2. Dispositif de fixation (1) selon la revendication 1, **caractérisé en ce que** les moyens d'immobilisation axiale (5) comprennent des moyens de butée axiale (12), comportant au moins une facette de butée (13) destinée à recevoir en appui l'extrémité distale (2b) du capteur (2) pour maintenir l'extrémité distale (2b) du capteur (2) à un écart (E) longitudinal prédéterminé dudit épanouissement (6).

3. Dispositif de fixation (1) selon la revendication 2, **caractérisé en ce que** les moyens de butée axiale (12) comprennent au moins une excroissance (14) s'étendant longitudinalement depuis l'épanouissement (6) en direction de la première extrémité (3a).

4. Dispositif de fixation (1) selon l'une quelconque des revendications 1 à 3, **caractérisé en ce que** :
- le passage longitudinal traversant (4) comporte :
• un premier tronçon (T1) comportant des premiers moyens d'appui (15) conformés de façon à venir porter en appui contre la surface extérieure cylindrique du capteur (2),
• un deuxième tronçon (T2), faisant suite au premier tronçon (T1) en direction de la deuxième extrémité (3b), comportant une section transversale de dimensions supérieures aux dimensions de la section transversale du capteur (2) et procurant ainsi une chambre radiale (16) ménagée autour du capteur (2) lorsque celui-ci est engagé dans le deuxième tronçon (T2),
• un troisième tronçon (T3), faisant suite au deuxième tronçon (T2) en direction de la deuxième extrémité (3b), comportant des deuxièmes moyens d'appui (17) conformés de façon à venir porter en appui contre la surface extérieure cylindrique du capteur (2),
• un quatrième tronçon (T4), compris entre ledit épanouissement (6) et ladite au moins une facette de butée (13),
- les moyens d'amenée d'un fluide (11) comportent :
• la chambre radiale (16) ménagée dans le deuxième tronçon (T2),
• un passage radial (20) ménagé dans la paroi latérale du corps tubulaire (3) et permettant l'injection d'un fluide dans la chambre radiale (16) du deuxième tronçon (T2),
• au moins un passage longitudinal (21) autorisant le passage d'un fluide depuis le deuxième tronçon (T2) vers le quatrième tronçon (T4) en présence d'un capteur (2) engagé dans le troisième tronçon (T3).

5. Dispositif de fixation (1) selon la revendication 4, **caractérisé en ce que** les deuxièmes moyens d'appui (17) comportent une pluralité de protubérances (22) s'étendant radialement vers l'intérieur, séparées entre elles par une pluralité de passage longitudinaux (21) autorisant le passage d'un fluide depuis le deuxième tronçon (T2) vers le quatrième tronçon (T4) en présence d'un capteur (2) engagé dans le troisième tronçon (T3).

6. Dispositif de fixation (1) selon la revendication 5, **caractérisé en ce que** les protubérances (22) et passages longitudinaux (21) sont obtenus par fraisage radial.

7. Dispositif de fixation (1) selon l'une quelconque des revendications 4 à 6, **caractérisé en ce que** les premiers moyens d'appui (15) comprennent une surface latérale cylindrique (23) à section transversale de dimensions sensiblement égales aux dimensions de la section transversale du capteur (2).

8. Dispositif de fixation (1) selon l'une quelconque des revendications 1 à 6, **caractérisé en ce que** les moyens d'immobilisation axiale (5) comprennent un filetage intérieur (24) destiné à coopérer avec un filetage extérieur (2c) prévu sur la surface extérieure du capteur (2).

9. Dispositif de fixation (1) selon l'une quelconque des revendications 1 à 8, **caractérisé en ce que** l'épanouissement (6) est annulaire.

10. Dispositif de fixation (1) selon l'une quelconque des revendications 1 à 9, **caractérisé en ce que** le corps tubulaire (3) est pourvu d'un filetage extérieur (3c) sur une partie au moins de sa surface extérieure.

11. Procédé de nettoyage et/ou de refroidissement d'un capteur (2) ayant une forme cylindrique limitée par une extrémité proximale (2a) et une extrémité distale (2b), ledit procédé comportant les étapes suivantes :
a) fournir un capteur (2) ayant une forme cylindrique limitée par une extrémité proximale (2a) et une extrémité distale (2b),
b) fournir un dispositif de fixation (1) pour la tenue du capteur (2) comprenant :
- un corps tubulaire (3) s'allongeant selon un axe longitudinal médian (I-I) entre une première extrémité (3a) et une deuxième extrémité (3b) et comprenant un passage longitudinal traversant (4) destiné à recevoir ledit capteur (2),
- des moyens d'immobilisation axiale (5) du capteur (2) dans le passage longitudinal traversant (4),
- à la deuxième extrémité (3b) du corps tubulaire (3), un épanouissement (6) s'étendant radialement vers l'intérieur et définissant un orifice (7) à section transversale de dimensions inférieures aux dimensions de la section transversale du capteur (2),
- des moyens d'amenée d'un fluide (11) à l'intérieur du corps tubulaire (3) et jusqu'au voisinage de l'épanouissement (6),
c) insérer le capteur (2) dans le passage longitudinal traversant (4) du corps tubulaire (3) en ménageant un écart (E) longitudinal non nul entre l'extrémité distale (2b) du capteur (2) et ledit épanouissement (6), de sorte qu'une partie au moins d'un fluide circulant dans le corps tubulaire (3) par les moyens d'amenée de fluide (11) puisse circuler dans un espace de conduction radiale de fluide ainsi ménagé entre l'épanouissement (6) et l'extrémité distale (2b) du capteur (2),
d) injecter un fluide à l'intérieur du corps tubulaire (3) de façon que le fluide circule dans l'espace de conduction radiale de fluide ménagé entre l'épanouissement (6) et l'extrémité distale (2b) du capteur (2) et soit dévié pour balayer la surface frontale d'extrémité (20b) distale du capteur (2).

## Patentansprüche

1. Befestigungsvorrichtung (1) zum Halten eines Sensors (2) mit einer zylindrischen Form, die durch ein proximales Ende (2a) und ein distales Ende (2b) begrenzt ist, wobei die Befestigungsvorrichtung (1) umfasst:
- einen rohrförmigen Körper (3), der sich entlang einer Längsmittelachse (I-I) zwischen einem ersten Ende (3a) und einem zweiten Ende (3b) erstreckt, und der einen Längsdurchgang (4) zum Aufnehmen des Sensors (2) aufweist,
- Mittel zur axialen Fixierung (5) des Sensors (2) im Längsdurchgang (4),
- einen sich radial nach innen erstreckenden Schuh (6) am zweiten Ende (3b) des rohrförmigen Körpers (3), die eine Öffnung (7) mit einer Querschnittsabmessung definiert, die kleiner als die Querschnittsabmessung des Kollektors (2) ist,
**dadurch gekennzeichnet, dass**:
- die Mittel zur axialen Fixierung (5) eingerichtet sind, das distale Ende (2b) des Sensors (2) in einem vorbestimmten Mindestlängsabstand (E) zum Schuh (6) zu halten, so dass ein radialer Fluidführungsraum zwischen dem Schuh (6) und dem distalen Ende (2b) des Sensors (2) gebildet ist,
- die Fixiervorrichtung (1) Mittel zum Zuführen eines Fluids (11) in das Innere des rohrförmigen Körpers (3) und in den radialen Fluidführungsraum zwischen dem Schuh (6) und dem distalen Ende (2b) des Sensors (2) umfasst.

2. Befestigungsvorrichtung (1) nach Anspruch 1, **dadurch gekennzeichnet, dass** die axialen Mittel zur axialen Fixierung (5) axiale Anschlagmittel (12) umfassen, die mindestens eine Anschlagschulter (13) aufweisen, an die das distale Ende (2b) des Sensors (2) anschlagen kann, um das distale Ende (2b) des Sensors (2) in einem vorbestimmten Längsabstand (E) zum Schuh (6) zu halten.

3. Befestigungsvorrichtung (1) nach Anspruch 2, **dadurch gekennzeichnet, dass** die axialen Anschlagmittel (12) mindestens einen Vorsprung (14) aufweisen, der sich in Längsrichtung vom Schuh (6) in Richtung des ersten Endes (3a) erstreckt.

4. Befestigungsvorrichtung (1) nach einem der Ansprüche 1 bis 3, **dadurch gekennzeichnet, dass** :
- der Längsdurchgang (4) folgende Merkmale umfasst :
-- einen ersten Abschnitt (T1) mit ersten Lagermitteln (15), an die die zylindrische Außenfläche des Sensors (2) anlegbar ist,
-- einen sich an den ersten Abschnitt (T1) in Richtung des zweiten Endes (3b) anschließendenden zweiten Abschnitt (T2) mit einem Querschnitt, der größer ist als der Querschnitt des Sensors (2), so dass eine radiale Kammer (16) gebildet ist, die um den Sensor (2) herum ausgebildet ist, wenn dieser in den zweiten Abschnitt (T2) eingreift,
-- einen sich an den zweiten Abschnitt (T2) in Richtung des zweiten Endes (3b) anschließenden dritten Abschnitt (T3), der mit zweiten Lagermitteln (17) an die zylindrische Außenfläche des Sensors (2) anlegbar ist,
-- einen vierten Abschnitt (T4), der zwischen dem Schuh (6) und der mindestens einen Anschlagschulter (13) liegt,
- die Mittel zur Zuführung eines Fluids (11) umfassen :
-- die im zweiten Abschnitt (T2) vorgesehene radiale Kammer (16),
-- einen radialen Durchgang (20), der in der Seitenwand des rohrförmigen Körpers (3) ausgebildet ist und die Injektion eines Fluids in die radiale Kammer (16) des zweiten Abschnitts (T2) ermöglicht,
- mindestens einen Längsdurchgang (21), der den Durchgang eines Fluids vom zweiten Abschnitt (T2) zum vierten Abschnitt (T4) in Anwesenheit eines Sensors (2) ermöglicht, der in den dritten Abschnitt (T3) eingesetzt ist.

5. Befestigungsvorrichtung (1) nach Anspruch 4, **dadurch gekennzeichnet, dass** die zweiten Lagermittel (17) eine Vielzahl von Vorsprüngen (22) umfassen, die sich radial nach innen erstrecken und voneinander durch eine Vielzahl von Längsdurchgängen (21) getrennt sind, die den Durchgang eines Fluids vom zweiten Abschnitt (T2) zu dem vierten Abschnitt (T4) in Anwesenheit eines Sensors (2) ermöglichen, der in den dritten Abschnitt (T3) eingreift.

6. Befestigungsvorrichtung (1) nach Anspruch 5, **dadurch gekennzeichnet, dass** die Vorsprünge (22) und Längsdurchgänge (21) radiale Fräsungen sind.

7. Befestigungsvorrichtung (1) nach einem der Ansprüche 4 bis 6, **dadurch gekennzeichnet, dass** die ersten Lagermittel (15) eine zylindrische Seitenfläche (23) mit einem Querschnitt aufweisen, dessen Abmessungen im Wesentlichen den Abmessungen des Querschnitts des Sensors (2) entsprechen.

8. Befestigungsvorrichtung (1) nach einem der Ansprüche 1 bis 6, **dadurch gekennzeichnet, dass** die Mittel zur axialen Fixierung (5) ein Innengewinde (24) aufweisen, das dazu bestimmt ist, mit einem Außengewinde (2c) zusammenzuwirken, das an der Außenfläche des Sensors (2) vorgesehen ist.

9. Befestigungsvorrichtung (1) nach einem der Ansprüche 1 bis 8, **dadurch gekennzeichnet, dass** der Schuh (6) ringförmig ist.

10. Befestigungsvorrichtung (1) nach einem der Ansprüche 1 bis 8, **dadurch gekennzeichnet, dass** der rohrförmige Körper (3) ein Außengewinde (3c) wenigstens auf einem Teil seiner Mantelfläche besitzt.

11. Verfahren zum Reinigen und/oder Kühlen eines zylinderförmigen Sensors (2), der durch ein proximales Ende (2a) und ein distales Ende (2b) begrenzt ist, wobei das Verfahren die folgenden Schritte umfasst:
a) Bereitstellen eines zylinderförmigen Sensors (2), der durch ein proximales Ende (2a) und ein distales Ende (2b) begrenzt ist,
(b) Bereitstellen einer Befestigungsvorrichtung (1) zum Halten des Sensors (2) mit folgenden Merkmalen:
- einem rohrförmigen Körper (3), der sich entlang einer Längsmittelachse (I-I) zwischen einem ersten Ende (3a) und einem zweiten Ende (3b) erstreckt und einen Längsdurchgang (4) zum Aufnehmen des Sensors (2) aufweist,
- Mittel zur axialen Fixierung (5) des Sensors (2) im Längsdurchgang (4),
- einen sich radial nach innen erstreckenden Schuh (6) am zweiten Ende (3b) des rohrförmigen Körpers (3), der eine Öffnung (7) mit einer Querschnittsabmessung definiert, die kleiner ist, als die Querschnittsabmessung des Sensors (2),
- Mittel zum Zuführen eines Fluids (11) in das Innere des röhrenförmigen Körpers (3) im Bereich des Schuhs (6),
c) Einführen des Sensors (2) in den Längsdurchgang (4) des rohrförmigen Körpers (3), wobei ein von Null verschiedener Längsspalt (E) zwischen dem distalen Ende (2b) des Sensors (2) und dem Schuh (6) belassen ist, so dass zumindest ein Teil eines Fluids, das in dem rohrförmigen Körper (3) durch seine Mittel zum Zuführen eines Fluids (11) strömt, in einen so zwischen dem Schuh (6) und dem distalen Ende (2b) des Sensors (2) gebildeten radialen Fluidleitungsraum strömen kann,
d) Einführen eines Fluids in das Innere des rohrförmigen Körpers (3), so dass das Fluid durch den radialen Fluidleitungsraum strömt, der zwischen dem Schuh (6) und dem distalen Ende (2b) des Sensors (2) gebildet ist, und abgelenkt wird, um die distale Endfläche (20b) des Sensors (2) zu passieren.

## Claims

1. Fastening device (1) for holding a sensor (2) having a cylindrical form limited by a proximal end (2a) and a distal end (2b), the fastening device (1) comprising:
- a tubular body (3) extending along a median longitudinal axis (I-I) between a first end (3a) and a second end (3b) and comprising a longitudinal through passage (4) intended to receive said sensor (2);
- means (5) for axially immobilizing the sensor (2) in the longitudinal through passage (4);
- a flared portion (6), at the second end (3b) of the tubular body (3), extending radially inwards and defining an orifice (7) with a cross-section having smaller dimensions than the dimensions of the cross-section of the sensor (2),
**characterized in that**:
- the axial immobilization means (5) are shaped so as to keep the distal end (2b) of the sensor (2) at a predetermined minimum longitudinal distance (E) from said flared portion (6), so that a space for radial conduction of fluid is formed between the flared portion (6) and the distal end (2b) of the sensor (2);
- the fastening device (1) comprises means for carrying a fluid (11) inside the tubular body (3) and into the radial conduction space between the flared portion (6) and the distal end (2b) of the sensor (2).

2. Fastening device (1) according to Claim 1, **characterized in that** the axial immobilization means (5) comprise axial stop means (12), comprising at least one stop face (13) intended to receive the distal end (2b) of the sensor (2) in abutment in order to keep the distal end (2b) of the sensor (2) at a predetermined longitudinal distance (E) from said flared portion (6).

3. Fastening device (1) according to Claim 2, **characterized in that** the axial stop means (12) comprise at least one projection (14) extending longitudinally from the flared portion (6) toward the first end (3a).

4. Fastening device (1) according to any of Claims 1 to 3, **characterized in that**:
- the longitudinal through passage (4) comprises:
• a first section (T1) comprising first stop means (15) shaped so as to come into abutment against the cylindrical external surface of the sensor (2);
• a second section (T2), following on from the first section (T1) toward the second end (3b), comprising a cross-section having greater dimensions than the dimensions of the cross-section of the sensor (2) and thus providing a radial chamber (16) arranged around the sensor (2) when said sensor is engaged in the second section (T2);
• a third section (T3), following on from the second section (T2) toward the second end (3b), comprising second stop means (17) shaped so as come into abutment against the cylindrical external surface of the sensor (2);
• a fourth section (T4) included between said flared portion (6) and said at least one stop face (13);
- the means for carrying a fluid (11) comprise:
• the radial chamber (16) arranged in the second section (T2);
• a radial passage (20) arranged in the lateral wall of the tubular body (3) and allowing a fluid to be injected into the radial chamber (16) of the second section (T2);
• at least one longitudinal passage (21) allowing a fluid to pass from the second section (T2) toward the fourth section (T4) in the presence of a sensor (2) engaged in the third section (T3).

5. Fastening device (1) according to Claim 4, **characterized in that** the second stop means (17) comprise a plurality of protuberances (22) extending radially inwards, separated from each other by a plurality of longitudinal passages (21) allowing a fluid to pass from the second section (T2) toward the fourth section (T4) in the presence of a sensor (2) engaged in the third section (T3).

6. Fastening device (1) according to Claim 5, **characterized in that** the protuberances (22) and longitudinal passages (21) are obtained by radial milling.

7. Fastening device (1) according to any of Claims 4 to 6, **characterized in that** the first stop means (15) comprise a cylindrical lateral surface (23) with a cross-section having dimensions substantially equal to the dimensions of the cross-section of the sensor (2).

8. Fastening device (1) according to any of Claims 1 to 6, **characterized in that** the axial immobilization means (5) comprise an internal thread (24) intended to engage with an external thread (2c) provided on the external surface of the sensor (2).

9. Fastening device (1) according to any of Claims 1 to 8, **characterized in that** the flared portion (6) is annular.

10. Fastening device (1) according to any of Claims 1 to 9, **characterized in that** the tubular body (3) is provided with an external thread (3c) on at least part of the external surface thereof.

11. Method for cleaning and/or cooling a sensor (2) having a cylindrical form limited by a proximal end (2a) and a distal end (2b), said method comprising the following steps:
a) supplying a sensor (2) having a cylindrical form limited by a proximal end (2a) and a distal end (2b);
b) supplying a fastening device (1) for holding the sensor (2), comprising:
- a tubular body (3) extending along a median longitudinal axis (I-I) between a first end (3a) and a second end (3b) and comprising a longitudinal through passage (4) intended to receive said sensor (2);
- means (5) for axially immobilizing the sensor (2) in the longitudinal through passage (4);
- a flared portion (6), at the second end (3b) of the tubular body (3), extending radially inwards and defining an orifice (7) with a cross-section having smaller dimensions than the dimensions of the cross-section of the sensor (2);
- means for carrying a fluid (11) inside the tubular body (3) and into the vicinity of the flared portion (6);
c) inserting the sensor (2) into the longitudinal through passage (4) of the tubular body (3) while providing a non-zero longitudinal distance (E) between the distal end (2b) of the sensor (2) and said flared portion (6), so that at least some of a fluid circulating through the tubular body (3) via the means for carrying a fluid (11) can circulate in a space for radial conduction of fluid thus provided between the flared portion (6) and the distal end (2b) of the sensor (2);
d) injecting a fluid inside the tubular body (3) so that the fluid circulates in the space for radial conduction of fluid provided between the flared portion (6) and the distal end (2b) of the sensor (2) and is diverted in order to wipe the frontal distal end surface (20b) of the sensor (2).
